# EUROPEAN PATENT APPLICATION

(11) **EP 2 570 967 A1**
(43) Date of publication of application: **20.03.2013**
(21) Application number: 11181061.0
(22) Date of filing: 13.09.2011
(51) Int. Cl.: G06K 9/20, G06T 7/00, G06K 9/03, G06Q 30/00

(54) **Semi-automatic check-out system and method**

(71) Applicant: Nederlandse Organisatie voor Toegepast -Natuurwetenschappelijk Onderzoek TNO, 2628 VK Delft (NL)
(72) Inventor: Schavemaker, Johannes Gerardus Maria, 2628 VK Delft (NL); Tettelaar, Peter, 2628 VK Delft (NL)
(74) Representative: Jansen, Cornelis Marinus

(57) **Abstract**

Checking out a tray with a plurality of products, for example in a restaurant, is performed using an image acquisition terminal and a check out terminal between which the tray is transported by a user. The method comprises capturing an image of the products on the tray at the image acquisition terminal and associating the image with an identifier on a portable token at the image acquisition terminal. The image is stored in a storage system in association with the identifier. A product type recognition algorithm is applied to the image, the product recognition algorithm identifying respective areas in the image and types of products that are recognized in the respective areas. When the tray is received at the check out terminal after the transport by the user, the identifier is read from the token at the check out terminal, the stored image is retrieved on the basis of the identifier and the retrieved image is displayed at the check out terminal, combined with information derived from the recognized type of products in association with the respective areas in the image. An aggregate result is computed based on a combination of all the products recognized in the image and the tray is checked out from the check-out terminal based on the aggregate result and a comparison of the tray at the check-out terminal with the displayed image.

## Description

### Field of the invention

The invention relates to a semi- automatic check-out system and method.

### Background

Image recognition techniques provide for the recognition of products in a camera image. This may be used for example at a check out terminal, where a customer has to pays for collected products. A known solution to recognize products is the use of bar-codes on the products. When all products carry bar-codes and the bar-codes are all visible in the camera image, image processing can be used to detect the locations of the bar codes and to read information from the bar codes. This information can be used to retrieve data, such as prices of the products.

However, it is desirable that the products that can be handled by such a check-out system are not limited to products with bar codes. In self service restaurants for example one may want to sell fruit like apples and bananas, slices of bread etc without having to put bar code labels on each item. In this case, more advanced image recognition techniques may be used to recognize products from an image of a tray with products collected by a customer. Such techniques may compare parameters of the outline of products with reference parameters for a product type and/or compare parameters of the surface of the products that represent its texture with such reference parameters.

Of course, it is strongly desirable that recognition techniques are used that provide for highly reliable results. Recognition errors would result in price errors. However, especially if a low cost processing system is used for reliable advanced recognition techniques, the use of advanced recognition techniques may increase the time delay between acquisition of the image and check out. At peak times, when many customers want to check out substantially simultaneously, this may lead to irritating delays. An excessive number of final check out terminals with cashiers may be needed to cope with this.

### Summary

Among others it is an object to provide for a check out system and a method of checking out products on a carrier that on one hand provides for reliable check out and on the other hand reduces delay at the check out terminals.

A check out method for checking out a carrier with a plurality of products is provided, using an image acquisition terminal and a check out terminal between which the carrier is transported by a user, the method comprising
- capturing an image of the products on the carrier at the image acquisition terminal,
- associating the image with an identifier on a portable token at the image acquisition terminal;
- storing the image in a storage system in association with the identifier;
- applying a product type recognition algorithm to the image, the product recognition algorithm identifying respective areas in the image and types of products that are recognized in the respective areas;
- receiving the carrier at the check out terminal after the transport by the user;
- reading the identifier from the token at the check out terminal;
- retrieving the stored image on the basis of the identifier;
- displaying the retrieved image at the check out terminal, combined with information derived from the recognized type of products in association with the respective areas in the image;
- computing an aggregate result based on a combination of all the products recognized in the image;
- checking out the carrier from the check-out terminal based on the aggregate result and a comparison of the carrier at the check-out terminal with the displayed image.

The time taken to move to the check out terminal may be used to perform the recognition of the products in the image. The identifier on the token allows the check out terminal to retrieve the recognition record. The display of the image and the image areas associated with the identifier allow for verification and optional correction of the recognition result. As used herein, "displaying the image" comprises displaying any image derived from the data (e.g. pixel sample values or compressed image data) obtained by capturing the image, including, but not limited to, displaying an exact copy of the image. The display of the image may also allow for detection of changes made to products on the carrier after acquisition of the image from which the products are recognized. Thus for example, the cashier may verify that no products have been added to the carrier after acquisition of the image. When there is a plurality of check out terminals, the check out method allows the customer to proceed with the carrier to any check out terminal, independent of the image acquisition terminal where the token has been issued.

### Brief description of the drawing

These and other objects and advantageous aspects will become apparent from a description of exemplary embodiments, with reference to the following figures
- Figure 1: shows a check out system
- Figure 1a: shows a plan view of a restaurant
- Figure 2: shows a flow-chart of operation of an image acquisition terminal
- Figure 3: shows a flow-chart of operation of image data collection
- Figure 4: shows a flow-chart of operation of a check out terminal
- Figure 5: shows a camera set-up

### Detailed description of exemplary embodiments

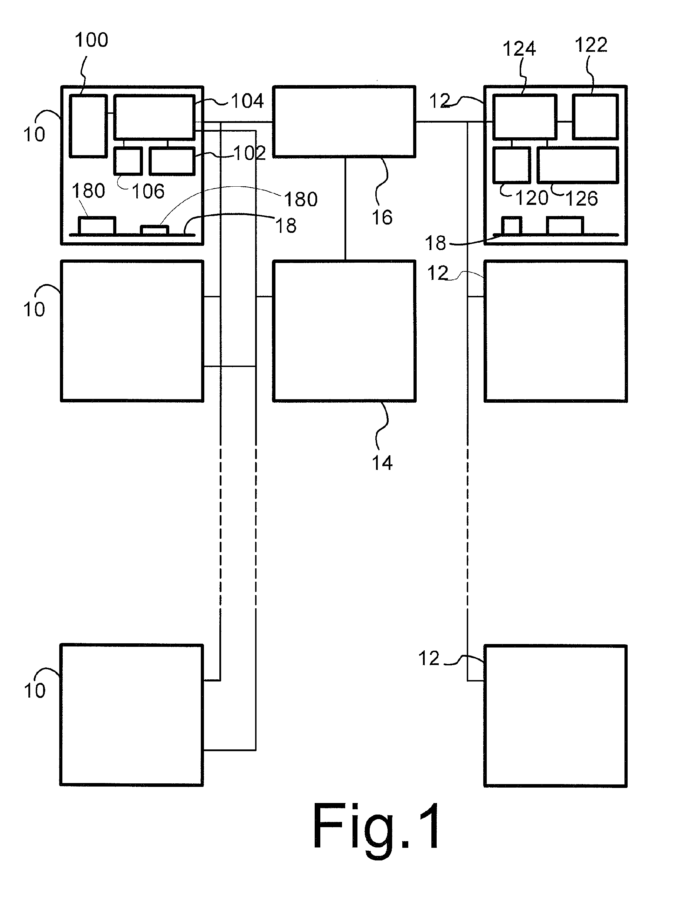

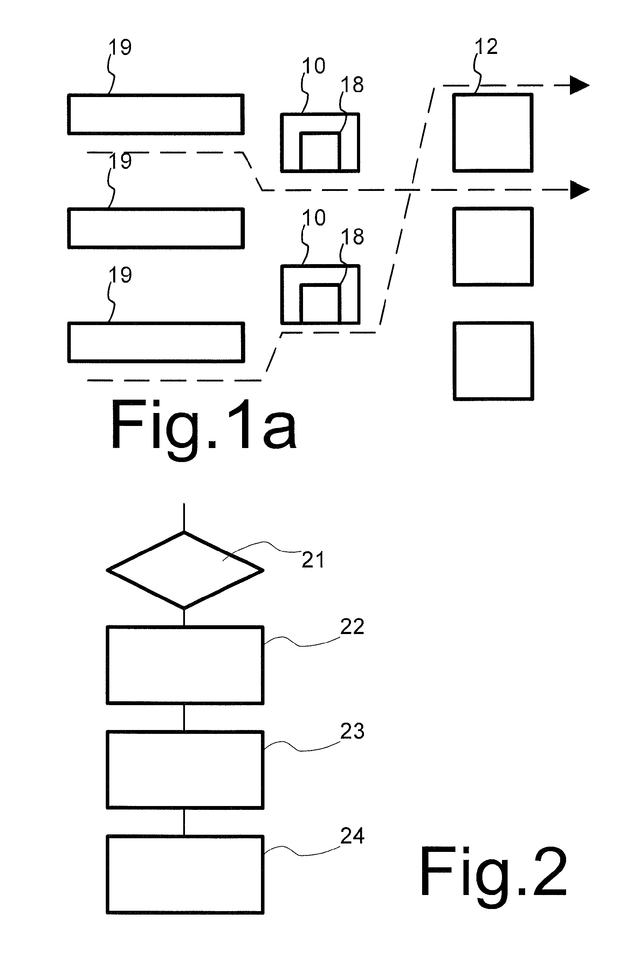

Figure 1 shows an exemplary check out system, comprising a plurality of image acquisition terminals 10, a plurality of check out terminal 12, a processing system 14 and a memory system 16. Each image acquisition terminal 10 comprises a camera 100, a printer 102, a processor 104 and an input device 106. The processor 104 of the image acquisition terminal 10 is coupled to camera 100, a printer 102, input device 106, memory system 16 and processing system 14. Each check out terminal 12 comprises a reader 120, a display device 122, a processor 124 and a user interface 126. The processor 124 of the check out device is coupled to reader 120, display device 122, user interface 126 and memory system 16. It should be emphasized that processing system 14 and processors 104, 124 of the image acquisition terminals and the check out terminals are shown by way of example: processors 104, 124 may be comprised in processing system 14, at least part of the task of processors 104, 124 may be performed in processing system 14 rather than at the terminals, or at least part of the tasks of processing system 14 may be performed at the terminals.

By way of example, a plurality of carriers 18 are shown on which a plurality of products 180 may be carried. Carriers 18 may be trays carried by customers of a self-service restaurant for example. In operation the customers collect products 180 from counters 19 and put them on their carrier 18, as illustrated in figure 1a, which shows a plan view of a restaurant. The products may include products with bar codes, such as packages containing meat or butter, but unpackaged products like fruit, bread or beverage glasses may also be placed on the carrier. Once the customer has collected all desired products. The customer places carrier 18 in one of image acquisition terminals 10 in view of camera 100 and activates input device 106 (e.g. a push-button). In response acquisition terminals 10 returns a token (a ticket for example) with information such as a barcode on it. Next the customer proceeds to an arbitrary one of check-out terminals 12. Check-out terminals 12 are manned by cashiers. At the check-out terminal 12 the customer shows the carrier to the cashier and enters the token. The check-out terminal 12 indicates the amount to be paid for the products. Check out occurs when the check out terminal receives a confirmation from the cashier after the customer has paid and the payment has been entered into the check out terminal. As used herein, "check out" may include storing data representing the payment transaction, and/or removing the image a set of stored images that awaits confirmation, and/or printing a receipt and/or a opening a gate to allow a tray with products, or user with such a tray, to pass.

Figure 2 shows a flow-chart of operation of an image acquisition terminal 10. In a first step 21, processor 104 waits until input device 106 indicates that it has been activated by a customer. If so, processor 104 executes a second step 22. In second step 22 processor 104 inputs a camera image from camera 100 and causes it to be stored in memory system 16. In a third step 23 processor 104 generates an identifier and causes printer 102 to print information representing the identifier on a token (e.g. a ticket) and to issue the token. In a fourth step 24 processor 104 signals the identifier and the location of the image in memory system 16 to processing system 14.

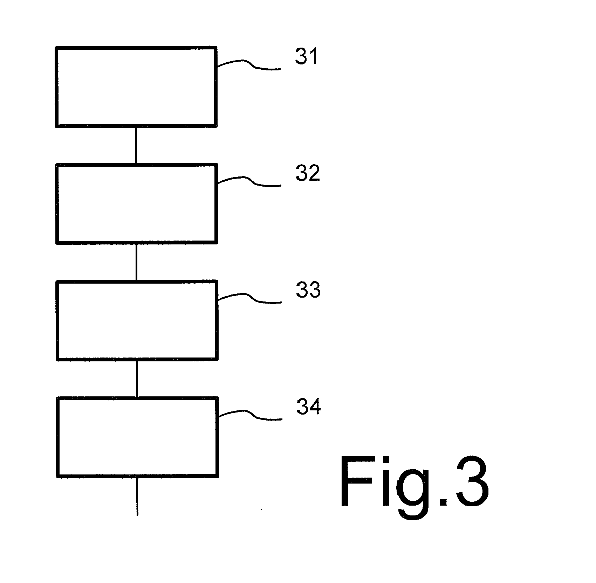

Figure 3 shows a flow chart of operation of processing system 104. Processing system 104 makes use of a list of product types, each type with a product code and a definition of reference data for recognizing an product of the product type, for example in the form of one or more sets of reference image properties with which image data from the image from image acquisition terminal 10 may be compared. In addition a definition of data for recognizing the surface of the carrier may be provided. In a first step 31 processing system receives the signal form the processor 104 of the image acquisition terminal 10. In a second step 32, processing system 14 applies a product recognition algorithm to the image indicated by the processor 104 of the image acquisition terminal 10. Processing system 14 segments the image into image areas showing different products of respective types. Processing system 14 assigns product codes to the image areas.

If the products carry identification labels such as bar codes that are visible in the image, processing system 104 may detect the location of such labels and read a code represented from the label. From this code the type of the product may be determined. However, not all products may carry such labels or the labels of some products may not be visible in the image. If this is possible, processing system 104 may use recognition techniques based on object properties.

Dependent on the recognition algorithm used, processing system 14 may first segment the image and then identify the types of products in the different image areas. In this case processing system 14 first segments the image into image areas based on the similarity of image content within the areas and the difference with adjacent areas. The measure of similarity or difference depends on the recognition algorithm that is used. It may be based on similarity of histograms for blocks of pixels within the areas for example. In one embodiment, histograms of pixel values may be compared, optionally histograms with normalized pixel value scales, to eliminate for variation of lighting conditions. In another embodiment, histograms of pixel value gradient orientations may be compared for example.

If the image is first segmented into image areas, the product recognition algorithm may be applied to the image content within the image areas, for example by comparing histograms of pixel data within the areas with reference histograms obtained for examples of different products types and the surface of the carrier and selecting the product that has the closest reference histogram, or no product if the surface of the carrier has the closest histogram. In an embodiment, properties of the shape of an image area obtained by the segmentation may be used for recognition, such as the relative positions and/or type of corner points in the outline of the image area. These relative positions may be compared with corresponding reference relative positions obtained for examples of the product types. In a further embodiment combinations of relative positions of corners and image gradient orientation histograms of image patches adjacent the corners may be compared with sets of reference relative positions and histograms for the product types.

Alternatively, processing system 14 may first recognize the products and then segment the image based on the recognition. Recognition may be performed for example , for example by detecting edges and/or homogeneous patches in the image and comparing the relative positions of the edges and/or patches with those in reference shapes for the products, to select the product that has the closest reference shape. The shape of the selected product may then be used to select the image area. In an embodiment reference data defining relative positions of corners may be defined for the product types and a search may be made for sets of detected corners in the image that have corresponding relative positions. In a further embodiment the reference data may include image gradient orientation histograms of image patches adjacent the corners for the product types and relative positions of corners and image gradient orientation histograms determined from the image may be compared with the reference data for the product types.

Subsequently, in a third step 33, processing system 14 assigns product codes to the image areas dependent on the selected products. In a fourth step 34, processing system 14 stores a recognition record, including the identifier received from image acquisition terminal 10, definitions of the image areas, a set of product codes assigned to these image areas and the image, or optionally a reference to the image. Optionally definitions of one or more image areas where no products have been detected may also be included.

In an embodiment, second step 32 may involve selection of a plurality of different product types for the same image area when the product type in the area cannot be uniquely determined with sufficient certainty. In this embodiment, third step 33 may involve including product codes of the plurality of alternative product types in the recognition record. In an embodiment, product recognition may comprise application of predetermined decision tests to image data, at least one respective decision test being provided for each product type. In this case, processing system 14 applies the decision tests for all product types to the image data and records the product types for which the tests indicated the presence of a product of the product type. A test may involve comparing a match score value, such as a histogram overlap score between a histogram derived from the image and a reference histogram, with a predetermined threshold. In another embodiment, product recognition may comprise a comparison of matching scores computed from the image for different product types and selection of the product type that has the highest matching score. In this embodiment, processing system 14 may select further product types with less than a predetermined difference from the highest matching score.

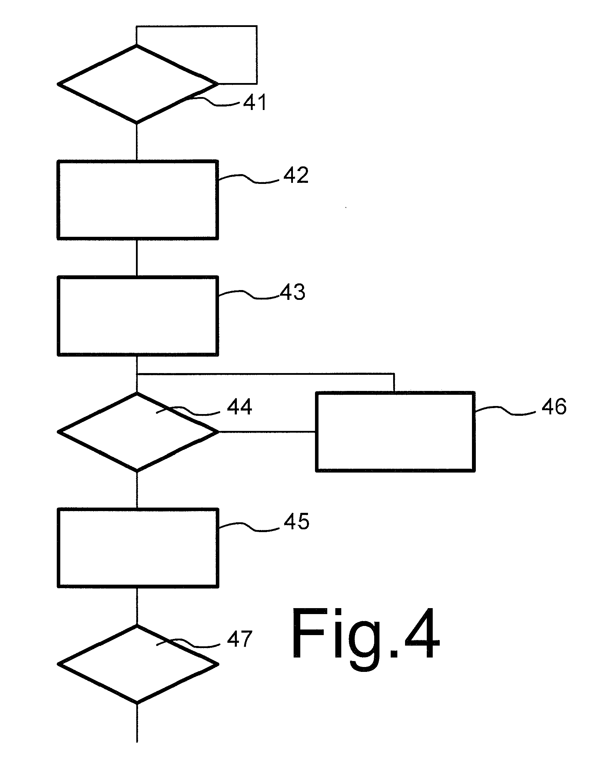

Figure 4 shows of a flow-chart of operation of a check-out terminals 12. In a first step 41, processor 124 waits until reader 120 detects a token. If so, processor 124 executes a second step 42, wherein it inputs the identifier from the token from reader 120. In a third step 43, processor 124 sends the identifier to processing system 14, combined with a request for the recognition record for that identifier. In a third step 43, processor 124 receives the recognition record. Processor 124 causes the image from the record (or referenced by the record) to be displayed on display device 122, marking the image areas and indicating the products defined by the product codes assigned to the areas. This enables the cashier to compare areas on the carrier submitted by the customer with the image areas shown on the display.

In a fourth step 44, processor 124 tests the interface 126 to detect whether the cashier has entered a confirmation that the recognition record is accepted. If so, processor 124 proceeds to a fifth step 45, wherein processor 124 uses the product codes to retrieve prices of the product from a stored table with price data for each product code in the set of product codes and to sum the prices of the products. Still in fifth step 45, processor 124 causes the total price to be indicated on display device. When processor 124 detects in fourth step 44 from the interface 126 that the cashier has indicated a desire to change the set of product codes, processor 124 proceeds to a sixth step 46 wherein processor 124 inputs changes to the set of product codes from interface 126. Next processor 124 repeats from fourth step 44. This enables the cashier to use the total charge for the set of product codes from the recognition record without further input of the images areas in the image correspond to products on the carrier, or to select to change the set of product codes. The risk of fraud is reduced by use of a two phase check out, wherein processor first waits for the confirmation of acceptation of the recognition record and the processor causes indication of the total price and/or prices of products only after receiving the confirmation the recognition result has been approved. Of course, the total amount or prices of the recognized product may be determined before confirmation, but it is preferred to display the only afterwards. In another embodiment, the total amount or prices of the recognized products may be displayed before confirmation.

In a seventh step 47, processor 124 waits for a confirmation that a transaction with the customer has been completed. When it receives this confirmation, processor 124 signals to processing system 14 that the recognition record, including the stored image, may be deleted.

In the embodiment wherein the recognition record may contain a plurality of product codes for a same area, third step 43 may comprise indicating the plurality of products as alternatives for the area. In this case, fourth step 44 may comprise proceeding to sixth step 46 when there are alternative recognized product types for the same area and sixth step 46 may comprise receiving a selection of one of the alternatives, to eliminate the other alternatives.

As will be appreciated the check out system allows the customer to proceed with the carrier to any check out terminal, independent of the image acquisition terminal where the token has been issued. The time taken to move to the check out terminal may be used to perform the recognition of the products in the image. The identifier on the token allows the check out terminal to retrieve the recognition record. The display of the image and the image areas associated with the identifier allow for verification and optional correction of the recognition result. The display of the image may also allow for detection of changes made to products on the carrier after acquisition of the image from which the products are recognized. Thus for example, the cashier may verify that no products have been added to the carrier after acquisition of the image.

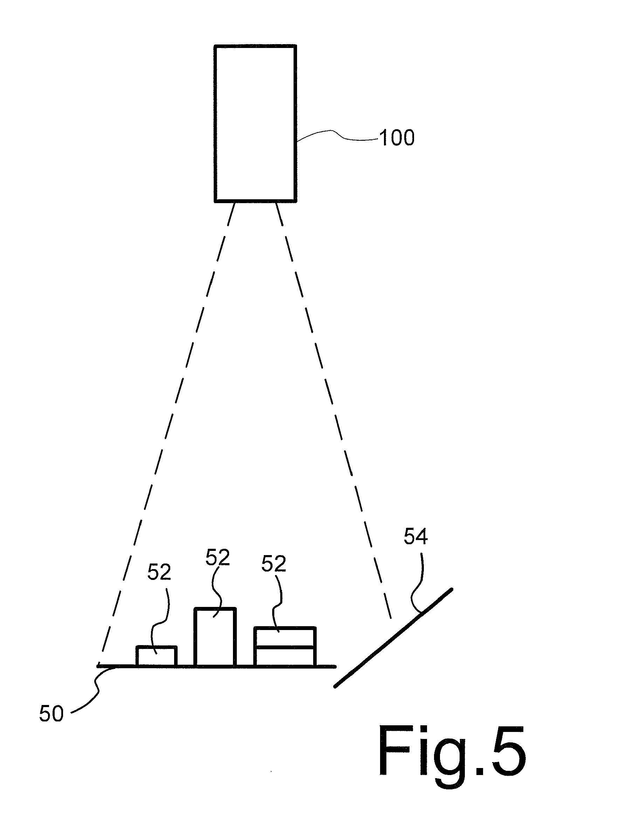

Figure 5 shows a camera set up of image acquisition terminal 10, comprising an overhead camera 100 located above a support surface for carrier 50 with products 52, and a mirror 54 located on the side of the support surface at an angle to reflect a side view of products 52 to camera 100 (although products 52 are shown in one plane, it should be appreciated that different products 52 may have different distances to the viewpoint of the figure). In this way, the image captured by camera 100 will contain a top view of carrier 50 with products 52, and adjacent to this top view a strip showing a side view. In an alternative embodiment, more than one mirror may be used, for example two mirrors on mutually opposite sides of carrier 50 with products 52, so that the image will contain more than one strip showing a side view. In another embodiment, a plurality of cameras may be used in the image acquisition terminal, to capture a top view and at least one side view. The part(s) of the image due to the mirror(s) and/or the image(s) from the side camera(s) will be referred to as side image(s). The part of the image from the overhead camera that is obtained directly, or this entire image if no mirrors are used, will be called the main image.

When a side image is available, processing system 14 may use the side image in the determination of the recognition record. In an embodiment the side image is used to determine a count of a number of stacked products. In this embodiment, an additional step is added after second step 32. In the additional step processing system 14 uses the position of the selected image areas in the main image to determine the locations where the sides of products visible in the image areas may be visible in the side image(s). Each image area in the main image is used to define a horizontal range of positions of the product in the side image(s). The horizontal range leaves an undefined height of a further image area, in which products are visible in the side image, if the products share the same positions in the main image. Processing system 14 uses the side image to determine the height of these products in the horizontal range. This may be done for example by segmenting a vertical band in the side image with positions in the horizontal range by any of the methods described for the main image. In this case the height of the lowest segment in the band above the carrier and a predetermined height of the products selected in second step 32, as defined in the list of product types, to estimate the number of products associated with the image area in the main image. In another embodiment, processing system 14 may detect boundaries between products in the band in the side image(s) and between the topmost product in the band and the background in the side image(s), and use the detected boundaries to determine the number of products.

As will be appreciated, some product types may nor allow for stacking. In this case, this may be indicated in the list of product types and processing system 14 may set the numbers to one for those image areas of the main image in which products of these types have been detected, without attempting to determine the number from the side image. In a further embodiment, the side image(s) may be used for the selection of the product type as well, for example by applying the recognition techniques described for the main image to the side image as well.

When numbers of stacked products determined from the side image(s) are detected, processing system 14 may adds the detected numbers of products to the recognition record in fourth step 34. In this case processor 124 of check out terminal 12 may read the detected numbers of stacked products from the recognition record and use these numbers to determine the prices in fifth step 45. Processor 124 may multiply the prices of individual products in different image areas by the numbers of stacked products in these image areas, or use prices listed for different numbers in the stored table for example.

It should be appreciated that although an exemplary check out system has been shown, the check out operation can be realized with alternative implementations. For example, the process described with reference to figure 3 may be executed by processor 104 of image acquisition terminal 10 instead of processing system 14, or all processes may be executed remote from the terminals by processing system 14. The processing system 14 may comprise a single processor or a plurality of processors that operate in parallel. The processors in processing system 14 and/or the terminals may be programmable processors, programmed with a program or programs of instructions that, when executed, will make the processor or processors execute the processes as described. The program or programs may be provided in a computer readable medium, such as a magnetic or optical disk or a semi-conductor memory. As user herein a processor is said to be configured to perform a specified process or process step when it is provided with a computer program to make it do so, and/or if its circuit is designed so that it will make it do so when activated.

Although an example has been described wherein image acquisition terminal 10 has a printer to print on a ticket (e.g. to print a barcode), and check out terminal has a reader to read the ticket it should be appreciated that instead writing and reading devices for writing to and reading from a token object comprising any other type of medium may be used. The medium may be a portable magnetic memory or a portable semi-conductor memory on a portable token for example, in which case the writer and reader may be a magnetic memory writer/reader or a semi-conductor memory writer/reader, for example. In another embodiment the function of the printer may be taken over by a reader in image acquisition terminal 10. In this embodiment portable tokens with a pre-programmed medium may be used, with the identifier preprogrammed in the medium. In this case, image acquisition terminal 10 may read the identifier from a submitted token, rather than generating the identifier. In such an embodiment, the customer may be issued such a token elsewhere and the customer may submit it for reading at the image acquisition terminal 10 and the check out terminal 12.

Payment may be performed by any means, e.g. by means of cash, charging against an account or by using a debit card or a credit card. Instead of a cashier operated payment, self service payment may be used. In this case the display of the image areas at the check out terminal only serves to assist the customer to check for errors. It does not protect against later additions to the carrier after acquisition of the image.

In a further embodiment, check out terminal 12 may also be provided with a camera, located relative to a support surface of the carrier as in image acquisition terminal 10. In this case, the process of figure 4 may be expanded with a step of comparing the image from image acquisition terminal 10 associated with the recognition record for the identifier with an image captured at check out terminal 12. The processor 124 of the check out terminal 12 may be configured to generate an alert if the images do not match. This step of comparing the images may be facilitated by using recognition results from the process of figure 3, such as the location and shape of the image areas, to assist the comparison. The location and shape of the image areas obtained with the process of figure 3 may be used to define image areas in the image from check out terminal 12 for which histograms have to be computed and compared with corresponding histograms for the areas from the image the image acquisition terminal 10 or reference histograms for the detected products. In an embodiment the location and shape of the image areas where no products have been found with the process of figure 3 may be used to define areas where processor 124 of the check out terminal 12 should use the image to test whether products have been added.

In another embodiment data representing an image captured at check out terminal 12 may be stored in memory system 16 when an identifier is read from a token and associated with the image captured in relation to the same identifier at the image acquisition terminal 10. A reference to the stored image from check out terminal may be stored in the recognition record for example. This allows for later verification that no products have been added to the carrier after acquisition of the image at image acquisition terminal 10.

## Claims

1. A check out method for checking out a carrier with a plurality of products, using an image acquisition terminal and a check out terminal between which the carrier is transported by a user, the method comprising
- capturing an image of the products on the carrier at the image acquisition terminal,
- associating the image with an identifier on a portable token at the image acquisition terminal;
- storing the image in a storage system in association with the identifier;
- applying a product type recognition algorithm to the image, the product recognition algorithm identifying respective areas in the image and types of products that are recognized in the respective areas;
- receiving the carrier at the check out terminal after the transport by the user;
- reading the identifier from the token at the check out terminal;
- retrieving the stored image on the basis of the identifier;
- displaying the retrieved image at the check out terminal, combined with information derived from the recognized type of products in association with the respective areas in the image;
- computing an aggregate result based on a combination of all the products recognized in the image;
- checking out the carrier from the check-out terminal based on the aggregate result and a comparison of the carrier at the check-out terminal with the displayed image.

2. A check out method according to claim 1, wherein the image is captured using an overhead camera located above the carrier, a side image being captured from aside the carrier as well, the method comprising
- using a location of at least one of the image area in the image to determine a range of locations wherein products in said at least one of the image areas will be visible in the side image;
- determining a number of stacked products from the side image in said range;
- computing the aggregate result dependent on a said number of stacked products.

3. A check out method according to claim 1, wherein the image and the side image are obtained from first and second parts of a camera image from the overhead camera respectively, a mirror aside the carrier being used to image a side view of the carrier on said second part of the camera image.

4. A check out method according to any one of the preceding claims, wherein said product type recognition algorithm comprises computing parameters of shapes of outlines of the image areas and/or computing histograms of image based data from the image areas, and comparison of the parameters of the shapes and/or the histograms with reference data for respective ones of the types of products.

5. A check out method according to claim 4, wherein the histograms comprise histograms of pixel value gradient orientation, the product type recognition algorithm comprising comparing combinations of outline feature positions and the histograms of pixel value gradient orientation with corresponding combinations in the reference data.

6. A check out method according to any one of the preceding claims, comprising first segmenting the image into said image areas based on image content in the areas and subsequently comparing shapes of the image areas and/or histograms derived from image data in the image areas with reference data for respective ones of the types of products.

7. A check out method according to any one of the preceding claims, wherein the recognition algorithm is configured to identify a plurality of alternative product types for a same image area based on the image if no unique recognition result is obtained, said displaying comprising displaying the alternative product types in association with said same image areas, the method comprising a step of receiving a selection between the alternative product types at the check out terminal prior to computing the aggregate result.

8. A check out method according to any one of the preceding claims, comprising writing the identifier onto the portable token at the image acquisition terminal.

9. A check out method according to any of the preceding claims, comprising waiting for a confirmation input after a start of said displaying combined with the information derived from the recognized type of products.

10. A check out method according to claim 8, comprising displaying the aggregate result only after receiving the confirmation input.

11. A check out system, configured to execute the method of any one of the preceding claims.
- receiving the carrier at the check out terminal after the transport by the user;

12. A check out system comprising an image acquisition terminal, a data processing system coupled to the image acquisition terminal, a storage device coupled to the data processing system and a token reading and/or writing device at the image acquisition terminal, coupled to the data processing system, a check out terminal coupled to the data processing system, the check out terminal having a display screen, a token reading device at the check out terminal coupled to the data processing system, the data processing system being configured to
- capture an image of the products on a carrier from the image acquisition terminal,
- associate the image with an identifier on a portable token, by causing the token reading and/or writing device to read the token and/or by causing the token reading and/or writing device to write the identifier onto the token;
- store the image in the storage system in association with the identifier;
- apply a product type recognition algorithm to the image, the product recognition algorithm identifying respective areas in the image and types of products that are recognized in the respective areas;
- read the identifier from the token using the token reading device;
- retrieve the stored image on the basis of the identifier;
- cause the stored image to be displayed on the display screen of the check out terminal, combined with information derived from the recognized type of products in association with the respective areas in the image;
- compute an aggregate result based on a combination of all the products recognized in the image;
- check out the carrier from the check-out terminal based on the aggregate result and a comparison of the carrier at the check-out terminal with the displayed image.

13. A computer program product comprising a program of instructions for a programmable processing system that, when executed by the programmable processing system will make the programmable processing system execute the method of any one of claims 1-10.
